# EUROPEAN PATENT APPLICATION

(11) **EP 4 135 185 A1**
(43) Date of publication of application: **15.02.2023**
(21) Application number: 21190859.5
(22) Date of filing: 11.08.2021
(51) Int. Cl.: H02M 7/483, H02M 7/493, H02M 1/00

(54) **LATTICE MULTILEVEL CONVERTER**

(71) Applicant: Technische Universität Kaiserslautern, 67663 Kaiserslautern (DE)
(72) Inventor: Götz, Stefan, 67663 Kaiserslautern (DE); Fang, Jingyang, 67663 Kaiserslautern (DE)
(74) Representative: Durm Patentanwälte PartG mbB

(57) **Abstract**

The present invention relates to a lattice multilevel converter (100) comprising at least two lattice cells (500), the lattice cell (500) comprises at least 3 nodes (612) and at least 3 branches (611), each branch (611) interconnecting two of the nodes (612), wherein at least one branch (611) comprises a converter circuit (200) having a module (101), the module (101) having an energy storage element (300), a switching element (400) and two module terminals (800); wherein the switching element (400) is able to connect the energy storage element (300) in such a manner that the module (101) acts like a H-bridge circuit or a half-bridge circuit between the two module terminals (800), one of the nodes (612) is a converter terminal, and wherein the lattice multilevel converter (100) comprises at least two converter terminals; and the two lattice cells (500) being adjacent to one another in such a manner that the two lattice cells (500) share at least one branch (611) and at least two nodes (612).

## Description

The present invention relates to a lattice multilevel converter comprising at least two lattice cells. The lattice cell itself comprises at least 3 nodes and at least 3 branches, each branch interconnecting two of the nodes. The electrical lattice multilevel converter comprises two-dimensional or three-dimensional circuit cells that are repetitively connected to a two-dimensional plane or a three-dimensional space.

AC electric motors, such as those in electric vehicles, usually require a power converter that converts the DC voltage supplied by a battery or a power supply into an AC voltage, or vice versa. In addition, distributed renewable energy resources, such as solar photovoltaics and wind, are normally connected to the grid through DC-AC and AC-DC power converters. Moreover, DC-AC and AC-DC converters are used to compensate reactive power and harmonics in static compensators (STATCOMs) and active power filters (APFs). Typically, the converters in these applications use so-called bridge circuits that alternately connect their output terminals to a positive and a negative pole of the DC voltage source. In each switching state, the converters choose the residence duration such that the demanded AC voltage arises on average over time. However, an AC voltage generated in this way normally features a lower voltage amplitude than that of the DC voltage, low voltage quality, and substantial distortions. In addition, high energy losses occur as a result of switching processes. Further disadvantages occur in electromagnetic compatibility, since the high-frequency switching edges that arise as a result of the switching cause high energies to be emitted electromagnetically. In addition, the converters based on bridge circuits necessitate expensive switches since the latter have to be designed in each case for the peak voltage.

The above-mentioned problems can be solved by multilevel converters. Multi-level converters allow the output load voltage to be higher than the module DC voltage and generated in small stages, thus resulting in less voltage harmonics and electromagnetic noise. Through the proper activation of semiconductor switches, energy losses during switching processes can be minimized. As a plurality of switches are connected in series, multilevel converters with switches of low voltage ratings can undertake high voltages. Among multilevel converters, three types are practically proven. First, diode-clamp converters are known inter alia from scientific reference Nabae et al. (1981) [A. Nabae, I. Takahashi, and H. Akagi (1981). A new neutral-point-clamped PWM inverter, IEEE Transactions on Industrial Application, 17(5):518-523], which is incorporated by reference herein. The second type refers to flying-capacitor converters, detailed in scientific reference Meynard et al. (1992) [T. A. Meynard and H. Foch (1992). Multi-level conversion: high voltage choppers and voltage-source inverters, IEEE Power Electronics Specialist Conference, 397-403], which is incorporated by reference herein. Third, cascaded-bridge converters are known from patent publication US 3,867,643, which is incorporated by reference herein. Moreover, modular multilevel converters (MMCs) are introduced by scientific reference Marquardt et al (2003) [R. Marquardt and A. Lesnicar (2003). A new modular voltage source inverter topology, IEEE European Conference on Power Electronics and Applications, 1-10], which is incorporated by reference herein. In addition, patent publication DE 101 03 031 B4 discloses a basic MMC and shall be included here by reference.

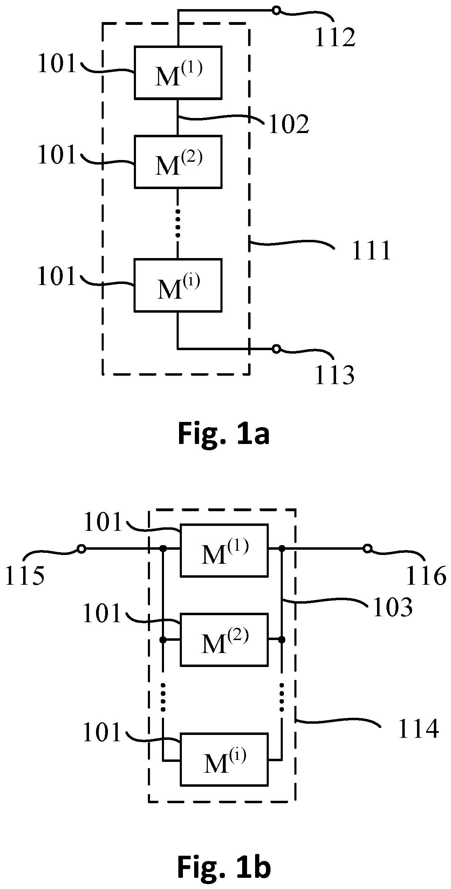

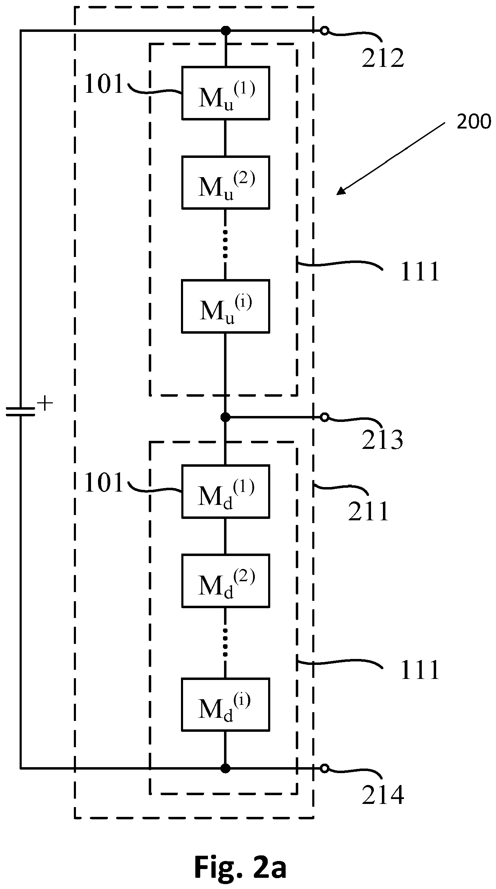

As compared to diode-clamp converters and flying-capacitor converters, cascaded-bridge converters (see Fig. 1a) and MMCs (see Figs. 2a-2f) require the least number of additional components, such as clamping diodes and voltage balancing capacitors, to achieve the same voltage levels. In addition, cascaded-bridge converters and MMCs consist of identical modules, thereby enjoying the benefits of modularity and scalability. Each module comprises at least one energy storage element and at least two active switches. A module is electrically interconnected with at least one neighboring module, wherein the electrical interconnection is dynamically variable during operation, such that the ac output voltage is synthesized by dynamically changing the connection of electrical energy storage elements. Hereinafter the term "electrical energy storage element" is intended also to include electrical energy sources and energy sinks which differ from electrical energy storage elements merely in that they preferably enable one area of operation, either an energy uptake or an energy delivery. Furthermore, the electrical energy storage elements designated here need not necessarily be ideal, and therefore free of losses, and so the energy that can be drawn may be lower than that previously fed in.

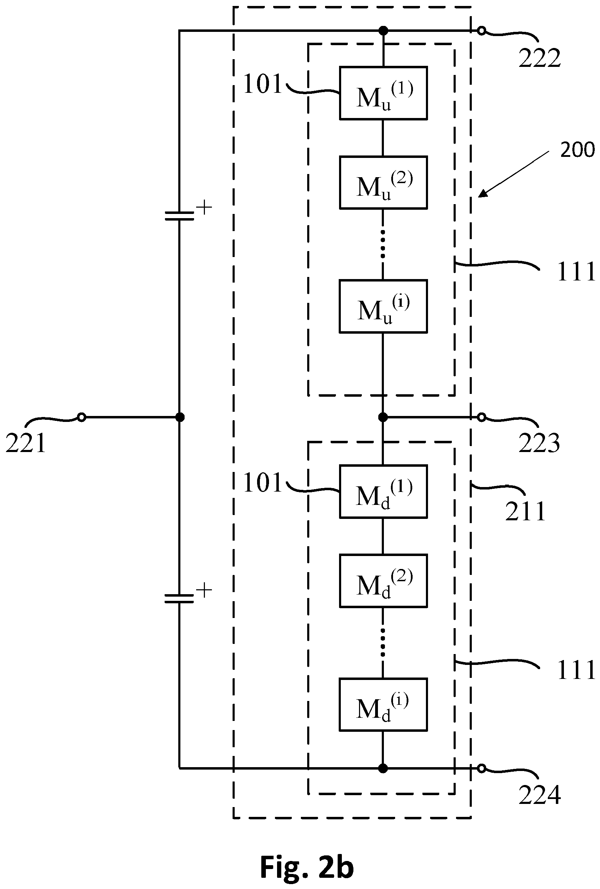

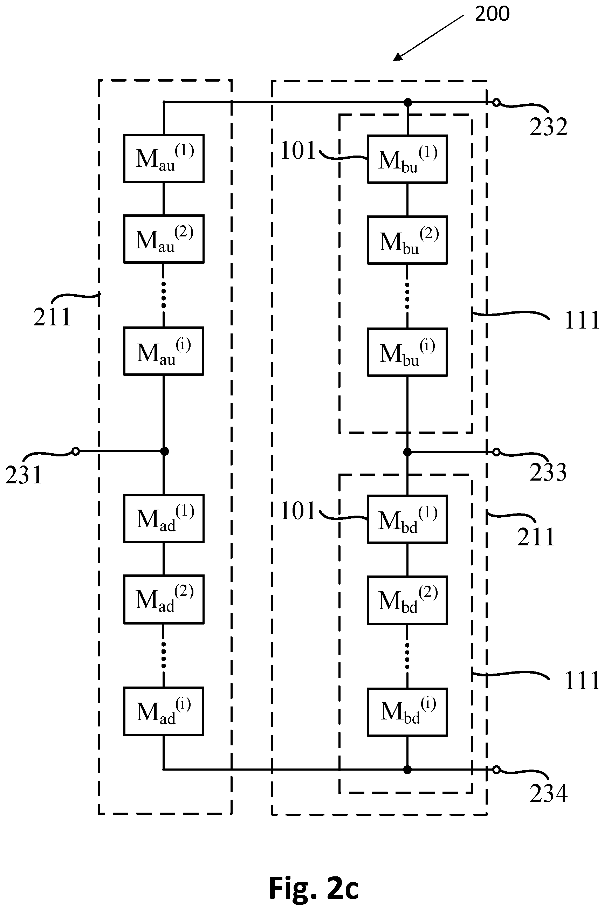

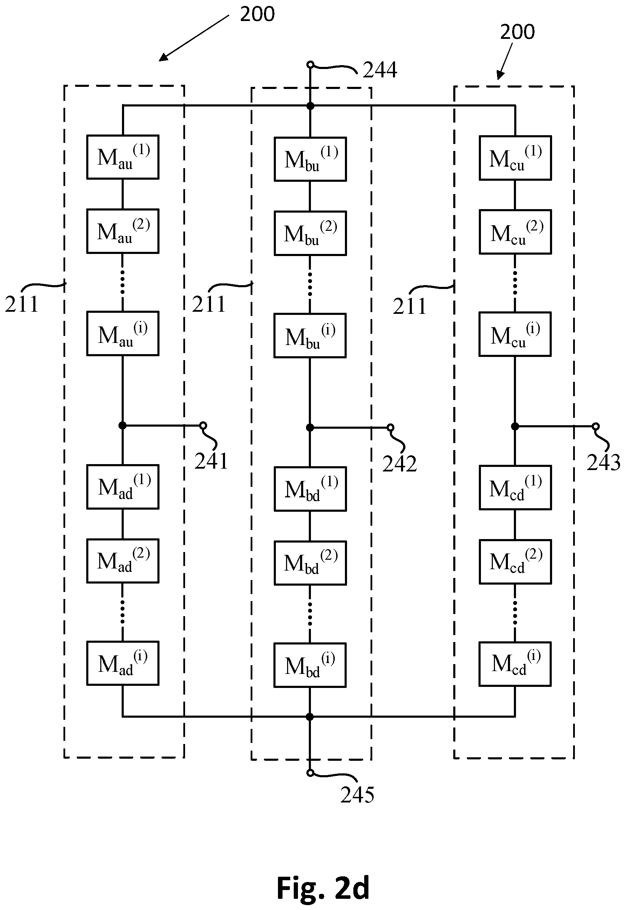

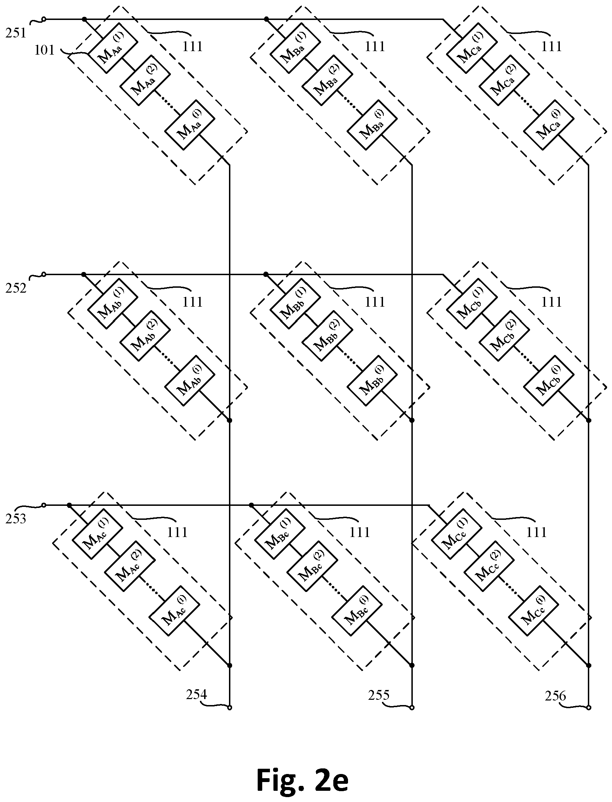

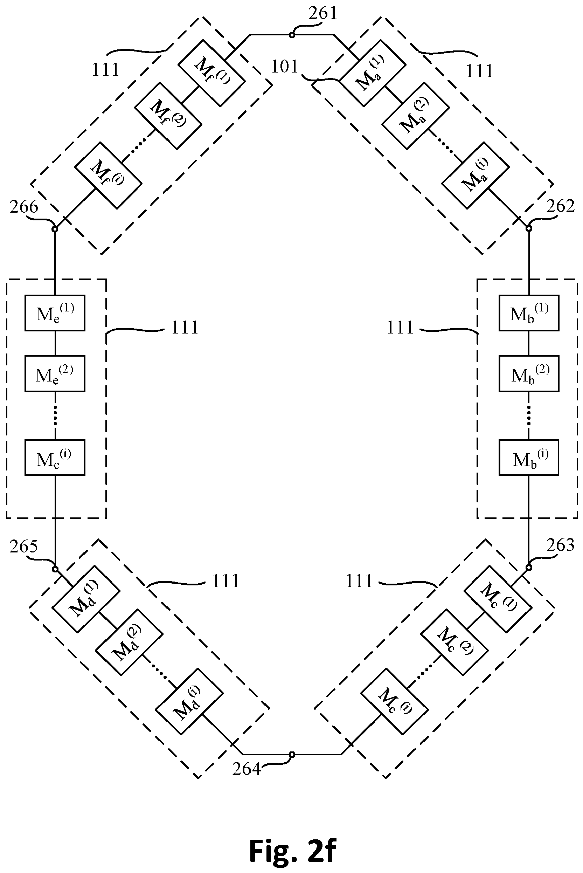

MMCs can be derived by replacing the active switches of standard two-level converters by cascaded-bridge converter circuits. Therefore, MMCs inherit the advantages from cascaded-bridge converters. Scientific reference Gupta et al. (2016) [K. K. Gupta, A. Ranjan, P. Bhatnagar, L. K. Sahu, and S. Jain, "Multi-level inverter topologies with reduced device count: a review," in IEEE Transactions on Power Electronics, vol. 31, no. 1, pp. 135-151, Jan. 2016, doi: 10.1109/TPEL.2015.2405012] discloses several MMCs in DC-DC power conversion applications (see Fig. 2a), which is incorporated by reference herein. Scientific reference Yang et al. (2019) [S. Yang, J. Fang, Y. Tang, H. Qiu, C. Dong, and P. Wang, "Modular multilevel converter synthetic inertia-based frequency support for medium-voltage microgrids," in IEEE Transactions on Industrial Electronics, vol. 66, no. 11, pp. 8992-9002, Nov. 2019, doi: 10.1109/TIE.2018.2890491] uses MMCs based on symmetrical half-bridge circuits (see Fig. 2b), which is incorporated by reference herein. Scientific reference Glinka et al. (2005) [M. Glinka and R. Marquardt, "A new AC/AC multilevel converter family," in IEEE Transactions on Industrial Electronics, vol. 52, no. 3, pp. 662-669, Jun. 2005, doi: 10.1109/TIE.2005.843973] discloses MMCs based on H-bridge circuits (see Fig. 2c), which is incorporated by reference herein. Scientific reference Perez et al. (2015) [M. A. Perez, S. Bernet, J. Rodriguez, S. Koura, and R. Lizana, "Circuit topologies, modeling, control schemes, and applications of modular multilevel converters," in IEEE Transactions on Power Electronics, vol. 30, no. 1, pp. 4-17, Jan. 2015, doi: 10.1109/TPEL.2014.2310127] discloses several MMCs, including the three-phase MMCs (see Fig. 2d), matrix MMCs (see Fig. 2e), and hexagonal MMCs (see Fig. 2f), which is incorporated by reference herein.

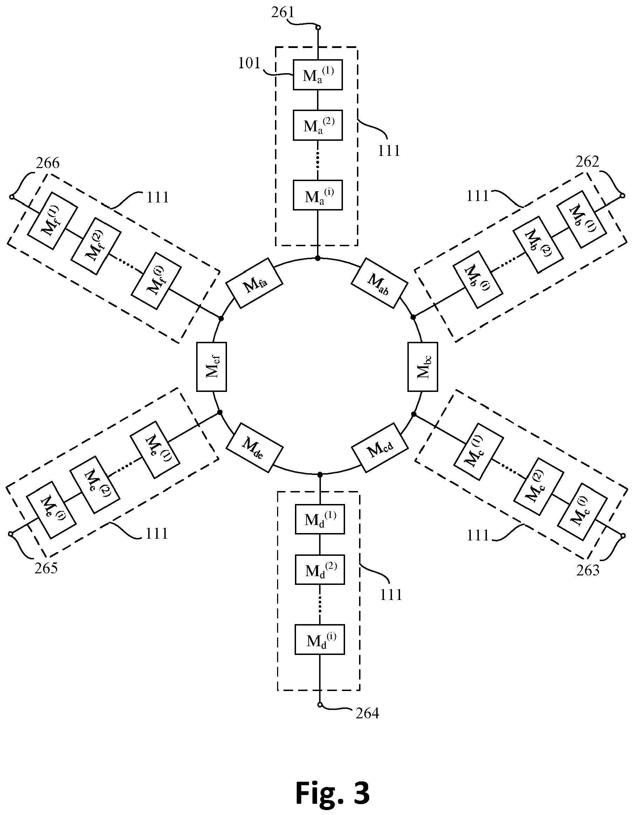

Patent publication US 10,158,49 B2, which shall be included here by reference, discloses a ring-star multilevel converter (see Fig. 3).

Cascaded-bridge converters and MMCs can contain various energy storage elements and modules. Patent publication US 10,442,309 B2, which shall be included here by reference, discloses a MMC with various module types that incorporate battery cells as energy storage elements. Patent publication US 10,218,189 B2, which shall be included here by reference, further describes modules that comprise balancing circuits for incorporated battery cells.

Patent application publication US 2018/0013339 A1 discloses further module circuits with a reduced number of switching elements and shall be included here by reference. Patent publication US 8,890,465 B2 describes an alternative module, which is optimized for motor drive applications and shall be included here by reference.

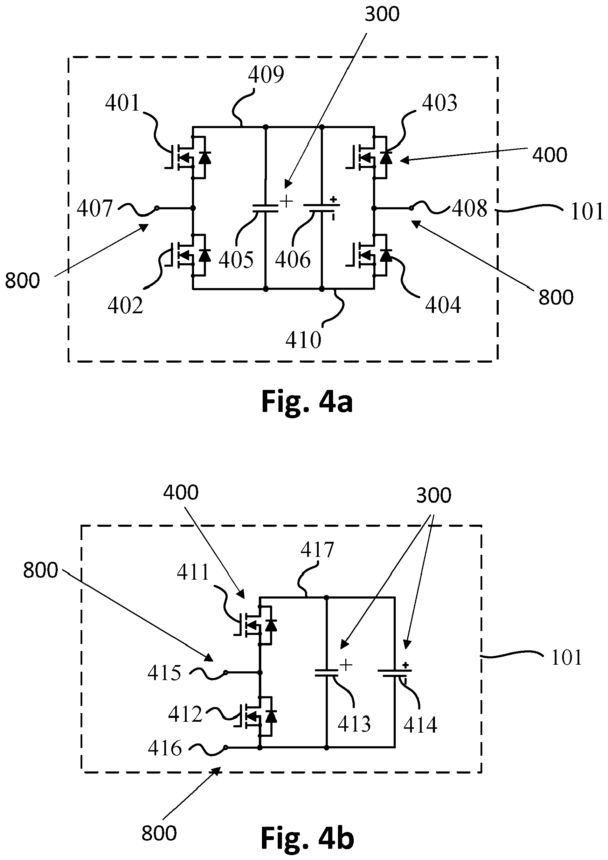

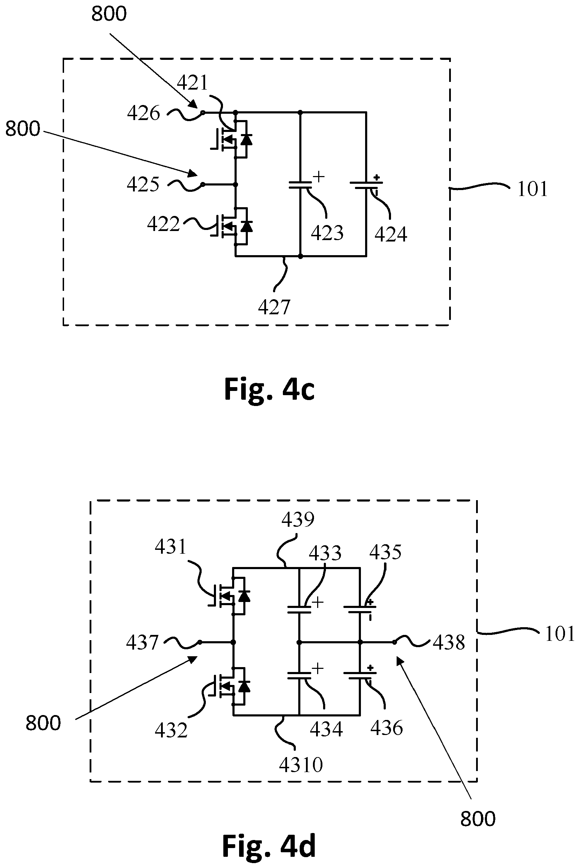

The most popular prior art modules of cascaded-bridge converters and MMCs are H-bridge modules (see Fig. 4a), positive half-bridge modules (see Fig. 4b), negative half-bridge modules (see Fig. 4c), and symmetrical half-bridge modules (see Fig. 4d). In comparison, half-bridge modules outweigh H-bridge modules in terms of simplicity, which further translates into lower cost and conduction losses as well as smaller system size and weight, whereas the opposite is true in respect of module functionality. Specifically, H-bridge modules allow bipolar and bypass operations, while positive and negative half-bridge modules can only output unipolar voltages. Symmetrical half-bridge modules can output bipolar voltages but cannot be bypassed.

Scientific reference Fang et al. (2020) [J. Fang, Z. Li, and S. Goetz, "Multilevel Converters with Symmetrical Half-Bridge Submodules and Sensorless Voltage Balance," IEEE Transactions on Power Electronics, doi: 10.1109/TPEL.2020.3000469] and German patent application publication DE 10 2019 006 476 A1 disclose symmetrical half-bridge modules and shall be included here by reference. Scientific reference Lizana et al. (2019) [R. Lizana F., S. Rivera, Z. Li, J. Luo, A. V. Peterchev, and S. M. Goetz, "Modular Multilevel Series/Parallel Converter With Switched-Inductor Energy Transfer Between Modules," in IEEE Transactions on Power Electronics, vol. 34, no. 5, pp. 4844-4852, May 2019, doi: 10.1109/TPEL.2018.2859902] discloses inductive interconnection of modules, which also applies to the invention disclosed here and shall be included by reference.

Scientific reference Deng et al. (2015) [Y. Deng and R. G. Harley, "Space-Vector Versus Nearest-Level Pulse Width Modulation for Multilevel Converters," in IEEE Transactions on Power Electronics, vol. 30, no. 6, pp. 2962-2974, June 2015, doi: 10.1109/TPEL.2014.2331687] describes control methods which can be part of the invention and shall be included by reference. Scientific reference Specht et al. (2017) [E. Specht, C. Aschauer, C. Korte and S. Goetz, "Direct Torque Control with Variable Level Discretization for Automotive Drives," PCIM Europe 2017; International Exhibition and Conference for Power Electronics, Intelligent Motion, Renewable Energy and Energy Management, Nuremberg, Germany, 2017, pp. 1-8., ISBN: 978-3-8007-4424-4] discloses a control method which can be part of the invention and shall be included by reference. Scientific references Wang et al. (2017) [C. Wang, F. R. Lizana, Z. Li, A. V. Peterchev, and S. M. Goetz, "Submodule short-circuit fault diagnosis based on wavelet transform and support vector machines for modular multilevel converter with series and parallel connectivity," IECON 2017 - 43rd Annual Conference of the IEEE Industrial Electronics Society, Beijing, 2017, pp. 3239-3244, doi: 10.1109/IECON.2017.8216547], Wang et al. (2019) [C. Wang, A. V. Peterchev, and S. M. Goetz, "Online Switch Open-Circuit Fault Diagnosis Using Reconfigurable Scheduler for Modular Multilevel Converter with Parallel Connectivity," 2019 21st European Conference on Power Electronics and Applications (EPE '19 ECCE Europe), Genova, Italy, 2019, pp. P.1-P.10, doi: 10.23919/EPE.2019.8915402] disclose control and fault detection methods, which can be part of the invention and is included by reference.

Cascaded-bridge converters and MMCs can undertake large voltages. However, they suffer from low current ratings, as modules are connected in series instead of in parallel. Novel MMCs with series and parallel module connectivity has been disclosed. However, the current rating of such novel MMCs is still limited by the current capability of a single module, as modules with parallel connectivity are connected in series from the perspective of macro level.

Patent publication US 9,496,799 B2 and scientific references Goetz et al. (2015) [S. M. Goetz, A. V. Peterchev, and T. Weyh, "Modular Multilevel Converter With Series and Parallel Module Connectivity: Topology and Control," in IEEE Transactions on Power Electronics, vol. 30, no. 1, pp. 203-215, Jan. 2015, doi: 10.1109/TPEL.2014.2310225] as well as Goetz et al. (2017) [S. M. Goetz, Z. Li, X. Liang, C. Zhang, S. M. Lukic, and A. V. Peterchev, "Control of Modular Multilevel Converter With Parallel Connectivity-Application to Battery Systems," in IEEE Transactions on Power Electronics, vol. 32, no. 11, pp. 8381-8392, Nov. 2017, doi: 10.1109/TPEL.2016.2645884] disclose double H-bridge modules (sometimes also subsumed under the MMSPC group), which comprise at least one energy storage element and switching elements arranged in more than two parallel-connected half-bridges and allow to dynamically and temporally connect the energy storage elements of neighboring modules to be connected in series, parallel, or bypass. These references are included by reference here. Patent publication US 9,502,960B2 and scientific reference Li et al. (2019) [Z. Li, R. Lizana F., Z. Yu, S. Sha, A.V. Peterchev, and S.M. Goetz, "A Modular Multilevel Series/Parallel Converter for a Wide Frequency Range Operation," in IEEE Transactions on Power Electronics, vol. 34, no. 10, pp. 9854-9865, Oct. 2019, doi: 10.1109/TPEL.2019. 2891052] disclose H-bridge modules with fewer transistors and are included by reference here.

Paralleled converters (see Fig. 1b) can undertake large currents. However, they suffer from low current ratings, as modules are connected in parallel instead of in series. In this sense, there is a strong motivation on the invention of converters that can undertake both high voltages and large currents.

Scientific reference Chandorkar et al. (1993) [M. C. Chandorkar, D. M. Divan, and R. Adapa, "Control of parallel connected inverters in standalone ac supply systems," in IEEE Transactions on Industrial Application, vol. 29, no. 1, pp. 136-143, Jan./Feb. 1993, doi: 10.1109/28.195899] discloses multiple paralleled DC-AC converters and are included by reference here.

It is an object of the present invention to provide a very flexible electrical converter which can bridge large voltage differences and which can be used in multiple applications and for different requirements.

The object is solved by a lattice multilevel converter according to claim 1, by an electronic chip according to claim 15, and a method according to claim 16.

The present invention provides, inter alia, a solution of implementing multilevel converters that can perform power conversion and undertake high voltages and large currents, theoretically up to infinite, on the basis of lattice cells, which consist of H-bridge and/or half-bridge circuit modules.

In a first aspect of the present invention a lattice multilevel converter comprises at least two lattice cells, the lattice cell comprises at least 3 nodes and at least 3 branches, each branch interconnects two of the nodes; wherein one branch comprises a converter circuit having a module; the module has an energy storage element, a switching element and at least two module terminals; wherein the switching element is able to connect the energy storage element in such a manner that the module acts like a H-bridge circuit and/or a half-bridge circuit or a combination of H-bridge and half-bridge between the at least two module terminals; one of the nodes is a converter terminal; and wherein the lattice multilevel converter comprises two converter terminals; and the two lattice cells being adjacent to one another in such a manner that the two lattice cells share at least one branch and at least two nodes. The modules can also act like a combination comprising two or more H-bridges and two or more half-bridges.

In a further aspect of the present invention, an electronic chip, in particular for power supplies, comprises a lattice multilevel converter as described above, wherein the switching elements and the energy storage elements are electronic components, preferably all switching elements are semiconductor switches and all energy storage elements are capacitors.

In a further aspect of the invention, a method is presented that allows for controlling a lattice multilevel converter as described above, wherein in one step of the method at least one of the switching elements is switched in such a manner that a predetermined energy storage element is connected in a predetermined way in the lattice cells so that a predetermined electrical conversion takes place between an input port and an output port of the lattice multilevel converter, wherein the input port and the output port each forms a converter terminal of the lattice multilevel converter.

In yet further aspects of the present invention, there is provided a computer program which comprises program code means for causing a computer to perform the steps of the method disclosed herein when said computer program is carried out on a computer as well as a non-transitory computer-readable recording medium that stores therein a computer program product, which, when executed by a processor, causes the method to be performed.

Preferred embodiments of the invention are defined in the dependent claims. It shall be understood that the claimed method, device, namely converter, computer program and medium have similar and/or identical preferred embodiments as the claimed converter, in particular as defined in the dependent claims and as disclosed herein.

The present invention is based on the idea that using a plurality of modules comprising an energy storage element, a switching element and two module terminals that can be switched in such a manner that the module acts like a H-bridge circuit or a half-bridge circuit between the two module terminals. The modules can also comprise so-called double-H-bridges so that two H-bridges are connected to an energy storage element. Such modules may have more than two terminals, in particular four terminals, two for each neighbor module. Such modules can effect several additional modes, for example dynamical parallel connections.

If the modules are connected in a desired manner to form at least two lattice cells, a lattice multilevel converter can be designed that allows to bridge large voltage differences between the two converter terminals of the lattice multilevel converter, namely an input port and an output port. The converter has the further advantage that various inputs and outputs can be used. A further advantage of the inventive lattice multilevel converter is that no inductances are used in the converter so that the converter is substantially free from inductances.

The lattice multilevel converter (LMC) has the advantage that it can be used in a wide range of applications and implementations. It has the advantage that power supplies can be designed with a variety of variable small power supplies. The lattice multilevel converter can also be used as a computer power supply or i.e., in an electrical cabinet or enclosure for electrical purposes.

The inventive multilevel converter provides a new interconnection of converters which can all be integrated in one multilevel converter. On the one hand, a very flexible converter is provided which can be used in a wide range of voltage conversion and/or current conversion. On the other hand, the multilevel converter has the advantage that preferably only components of power electronics can be used. The use of transistors like field-effect transistors (FET) or insulated gate bipolar transistors (IGBT) in particular has the advantage that the lattice multilevel converter is quite small in size and significantly cheaper than conventional converters. The inventive converter can be integrated in a chip or in an integrated circuit (IC). The lattice converter has the further advantage that it can be used to create a programmable power array with a lot of modules that act like H-bridges and/or half-bridges. The programmable power array may be controlled by a control device or a control unit of a system or by a computer using a specific software so that individual switching elements can be switched on and off according to the software or a desired request.

The inventive LMC has the benefit of modularity and scalability, boundless current and voltage ratings, high power quality, unified control; high reliability.

Since the lattice multilevel converter consists of standard modules or standard lattice cells, it is very simple and cheap to extend or expand existing lattice multilevel converters so that they can be adapted to new or changed requirements.

The inventive lattice multilevel converter will find applications for example in high-voltage dc/ac transmissions; renewable energy generation; power quality conditioning equipment; electric vehicles; marine and aircraft propulsion; medical applications such as noninvasive magnetic stimulators; high-frequency high-power power supplies; plasma applications; and/or future power grids.

The objective is also achieved by means of the disclosed electrical converters, namely the lattice multilevel converters, comprising a plurality of two-dimensional or three-dimensional lattice circuit cells that are repetitively connected to tile the plane or space. The lattice cells consist of a plurality of interconnected branches, which are cascaded-bridge circuits comprising a plurality of modules in series, multi-paralleled converter circuits comprising a plurality of modules in parallel, or any mix of them. Modules comprise H-bridge, positive half-bridge, negative half-bridge, symmetrical half-bridge modules, or any mix of them. Each module comprises a plurality of switches for dynamically switching between a plurality of so-called circuit states (also called module states or connection modes or connectivity modes or switch states or switching states) and at least one energy storage elements, such as capacitors, batteries, or any mix of capacitors and batteries, in its DC side. All the module outputs can be connected in series and/or in parallel via programmed operations, collectively forming the AC output voltage and current.

For cascaded-bridge converters, the modules are connected in series to share high voltages. All the modules undertake the same load current. As each module has a limited current rating determined by semiconductor switches and energy storage elements, cascaded-bridge converters cannot be applicable to high-current applications. MMCs can be derived by replacing switches or energy storage elements of conventional two-level converters by cascaded-bridge converters, thereby inheriting benefits and drawbacks from cascaded-bridge converters. Due to the limited number of arms (i.e., cascaded-bridge converter circuits), MMCs can only handle limited current ratings. In addition, as conventional two-level converters (such as buck converters) are not necessarily modular, MMCs feature no modularity from the macro-level topologies. They fail to tile either planes or spaces, leading to limited current ratings, power quality improvements, and modularity.

For multiple paralleled DC-AC and AC-DC converters, the modules are connected in parallel to share high currents. However, as each module has a limited voltage rating determined by semiconductor switches and energy storage elements, multi-paralleled converters cannot be applicable to high-voltage applications. They fail to tile either planes or spaces, leading to limited current ratings and power quality improvements.

In contrast, the disclosed lattice converters overcome the above-mentioned problems. As lattice converters extend their circuits in two-dimensional planes or three-dimensional spaces, they have the potential of constructing a plurality of serial and paralleled modules simultaneously and undertaking very high (up to infinite) voltages and large currents. Moreover, lattice converters can be constructed with identical cells, branches, and modules, thereby enjoying the benefits of modularity and scalability. Through programming, lattice converters allow serial and parallel connections among modules. Further configurations can be gathered from the dependent claims and the description.

Lattice converters consist of lattice cells, which can further comprise cascaded-bridge converter circuits and multi-paralleled converter circuits. Therefore, lattice converters can be constructed via popular modules, such as H-bridge, positive half-bridge, negative half-bridge, and symmetrical half-bridge modules, which shall in the following also include double versions of these to allow for parallel connection between modules as known from the patent and scientific literature listed above. Modules can be connected not only in series but also in parallel to its neighbors, dependent on control and modulation strategies. The parallelization of modules greatly simplifies control architectures. As long as one module DC voltage is well controlled, all the module voltages are equalized and well regulated. For each module, the control and modulation are inherited, where switches can work identically to those of conventional converter applications.

According to the present invention, the lattice multilevel converters can be regarded as a supplement of conventional multilevel converters. The former addresses voltage and current limitations as well as modularity requirement of the latter.

Further advantages and configurations of the invention are evident from the description and the accompanying drawings.

It goes without saying that the features mentioned above and those yet to be explained below can be used not only in the combination respectively indicated, but also in other combinations or by themselves, without departing from the scope of the present invention.

The invention is illustrated schematically on the basis of embodiments in the drawings and is described schematically and thoroughly with reference to the drawings.
- Fig. 1a: shows a cascaded-bridge converter from the prior art.
- Fig. 1b: shows a multi-paralleled converter from the prior art.
- Fig. 2a: shows a MMC based on the buck topology from the prior art.
- Fig. 2b: shows a MMC based on the symmetrical half-bridge.
- Fig. 2c: shows a MMC based on the H-bridge topology from the prior art.
- Fig. 2d: shows a MMC based on the three-phase-bridge.
- Fig. 2e: shows a MMC based on the matrix topology from the prior art.
- Fig. 2f: shows a MMC based on the hexagonal topology from the prior art.
- Fig. 3: shows a multilevel converter based on the ring-star.
- Fig. 4a: shows an H-bridge module from the prior art.
- Fig. 4b: shows a positive half-bridge module from the prior art.
- Fig. 4c: shows a negative half-bridge module from the prior art.
- Fig. 4d: shows a symmetrical half-bridge module from the prior art.
- Fig. 5a: shows the positive operation of the H-bridge module.
- Fig. 5b: shows the negative operation of the H-bridge module.
- Fig. 5c, 5d: show an example of the zero-output operation of the H-bridge module.
- Fig. 6a: shows an embodiment of the lattice converter based on the triangu-lar lattice cell according to aspects of the invention.
- Fig. 6b: shows an embodiment of the lattice converter based on the square lattice cell according to aspects of the invention.
- Fig. 6c: shows an embodiment of the lattice converter based on the hexag-onal lattice cell according to aspects of the invention.
- Fig. 7a: shows an embodiment of the lattice converter based on the pyramid lattice cell according to aspects of the invention.
- Fig. 7b: shows an embodiment of the lattice converter based on the cubic lattice cell according to aspects of the invention.
- Fig. 7c: shows an embodiment of the lattice converter based on the tri-prism lattice cell according to aspects of the invention.
- Fig. 8a: shows the current routes of an embodiment of the lattice converter based on a 2×2 square lattice according to the invention.
- Fig. 8b: shows an embodiment of the lumped node strategy for current sharing according to aspects of the invention.
- Fig. 9a: shows an embodiment of the modulators of the H-bridge module according to aspects of the invention.
- Fig. 9b: shows an embodiment of the gate signals of the H-bridge module according to aspects of the invention.
- Fig. 10a: shows the simulated AC load current and voltage of one embodi-ment of the disclosed lattice converter as an inverter based on a 2×2 square lattice according to aspects of the invention.
- Fig. 10b: shows the simulated module current and voltage of one embodi-ment of the disclosed lattice converter as an inverter based on a 2×2 square lattice according to aspects of the invention.
- Fig. 11: shows an application of the inventive lattice multilevel converter used in an electric vehicle.
- Fig.12: shows an application of the inventive lattice multilevel converter ap-plied to a photovoltaic generation system.

The electrical lattice multilevel converter according to aspects of the invention utilizes a plurality of two-dimensional or three-dimensional lattice cells that are repetitively connected to tile the plane or space. Each lattice cell consists of a plurality of interconnected branches, which can be either cascaded-bridge converter circuits with a plurality of modules in series or paralleled-converter circuits with a plurality of modules in parallel. Individual modules are controlled and programmed to generate variable multilevel output voltages, currents, and/or transfer energy among the electrical energy storage elements in modules. The converters according to aspects of the invention also relates to the so-called lattice multilevel converters. The lattice multilevel converters can be implemented in either a single-phase embodiment, a three-phase, or generally an n-phase embodiment, a single-port embodiment, a two-port embodiment, or generally an n-port embodiment, and with battery storage elements, capacitor storage elements, or any mix of them. The optional feature of combining at least one module with batteries with at least one modules with capacitors allows, for instance, saving expensive battery cells in a system and still generating voltages and currents notably higher than the sum of the voltages of all batteries.

The lattice multilevel converter 100 can be regarded as a variant of the cascaded-bridge converter or MMC in which at least some cascaded-bridge converters are interconnected to form lattice cells and undertake high currents. The converter circuits 200 mentioned are of modular design. That is to say, they consist of a plurality of modules interconnected with one another via at least two power lines, wherein the modules comprise at least one electrical energy storage elements and at least two electronic switching elements. By means of suitable activation of the switching elements of individual modules, the energy storage elements can be electrically connected either in series or in parallel with other modules, generally the neighbors, or be electrically isolated from other modules. Depending on the embodiment of the modules, these electrical connections can be performed individually for the respective energy storage elements.

Fig. 1a shows the cascaded-bridge converter from the prior art. It comprises a plurality of identical modules 101 that are connected in series through electrical cables 102, forming the two output terminals 112, 113. As all the modules collectively share the load voltage, cascaded-bridge converters can undertake very high voltages.

Fig. 1b shows the multi-paralleled converter from the prior art. It comprises a plurality of identical modules 101 that are connected in parallel through electrical cables 103, forming the two output terminals 115, 116. As all the modules collectively share the load current, multi-paralleled converters can undertake very large currents.

Fig. 2a shows an MMC based on the buck topology from the prior art, where the two active switches of the buck converter are replaced by cascaded-bridge circuits 111. This MMC is a converter circuit 200 that can step down a DC voltage or step up a DC current from the DC input port 212, 214 to the DC output port 213, 214, and vice versa.

Fig. 2b shows a converter circuit 200 in form of an MMC based on the symmetrical half-bridge topology from the prior art, where the two active switches of the symmetrical half-bridge converter are replaced by cascaded-bridge circuits 111. This MMC can convert a DC voltage/current across the DC terminals 222, 224 into an AC voltage/current across the AC terminals 221, 223, and vice versa.

Fig. 2c shows a converter circuit 200 in form of a MMC based on the H-bridge topology from the prior art, where the four active switches of the H-bridge converter are replaced by cascaded-bridge circuits 111, and the DC bus capacitor is removed. This MMC can convert a DC/AC voltage/current across one pair of terminals 231, 233 into a DC/AC voltage/current across the other pair of terminals 232, 234, and vice versa.

Fig. 2d shows a converter circuit 200 in form of a MMC based on the three-phase-bridge topology from the prior art, where the six active switches of the three-phase-bridge converter are replaced by cascaded-bridge circuits 111, and the DC bus capacitor is removed. This MMC can convert a DC voltage/current across the DC terminals 244, 245 into a three-phase AC voltage/current of the three AC terminals 241, 242, 243, and vice versa.

Fig. 2e shows a MMC based on the matrix topology from the prior art, where the nine active switches of the matrix converter are replaced by cascaded-bridge circuits 111. This MMC can convert a three-phase AC voltage/current of the three terminals 251, 252, 253 into a three-phase AC voltage/current of the other three terminals 254, 255, 256, and vice versa.

Fig. 2f shows a converter circuit 200 in form of a MMC based on the hexagonal topology from the prior art, where the six branches are cascaded-bridge circuits 111. This MMC can convert a three-phase AC voltage/current of the three terminals 261, 263, 265 into a three-phase AC voltage/current of the other three terminals 262, 264, 266, and vice versa.

Fig. 3 shows a ring-star multilevel converter from the prior art, where the six-star branches are cascaded-bridge circuits 111 and connected through a ring of six modules. This MMC can convert a three-phase AC voltage/current of the three terminals 261, 263, 265 into a three-phase AC voltage/current of the other three terminals 262, 264, 266, and vice versa. In addition, it can drive multi-phase electric motors.

Fig. 4a shows the so-called H-bridge module from the prior art, which can serve as the module 101 of cascaded-bridge converters, multi-paralleled converters, and MMCs. The H-bridge module comprises at least one electrical energy storage element 300, such as a capacitor 405 or a battery 406, switching elements 400, namely four active switches 401, 402, 403, 404, and two module terminals 800, 407, 408. Each switch comprises a transistor and a diode. The H-bridge module allows bipolar and bypass operations.

Fig. 4b shows the positive half-bridge module from the prior art, which can serve as the module 101 of cascaded-bridge converters, multi-paralleled converters, and MMCs. The positive half-bridge module comprises at least one electrical energy storage element, such as a capacitor 413 or a battery 414, switching elements 400 such as two active switches 411, 412, and two module terminals 800 as terminals 415, 416. Each switch comprises a transistor and a diode. The positive half-bridge module saves two active switches as compared to the H-bridge module but allows only unipolar and bypass operations.

Fig. 4c shows the negative half-bridge module from the prior art, which can serve as the module 101 of cascaded-bridge converters, multi-paralleled converters, and MMCs. The negative half-bridge module comprises at least one electrical energy storage element 300, such as a capacitor 423 or a battery 424, switching elements 400 such as two active switches 421 , 422, and two terminals 425, 426. Each switch comprises a transistor and a diode. The negative half-bridge module saves two active switches as compared to the H-bridge module but allows only unipolar and bypass operations.

Fig. 4d shows the symmetrical half-bridge module from the prior art, which can serve as the module 101 of cascaded-bridge converters, multi-paralleled converters, and MMCs. The symmetrical half-bridge module comprises at least two electrical energy storage elements, such as two capacitors 433, 434 or two batteries 435, 436, two active switches 431, 432, and two terminals 437, 438. Each switch comprises a transistor and a diode. The symmetrical half-bridge module saves two active switches as compared to the H-bridge module but allows only bipolar operation.

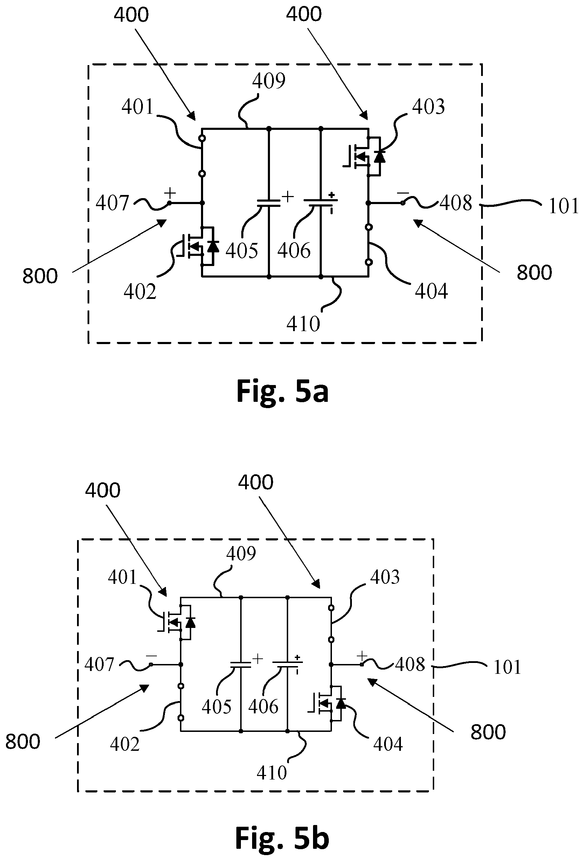

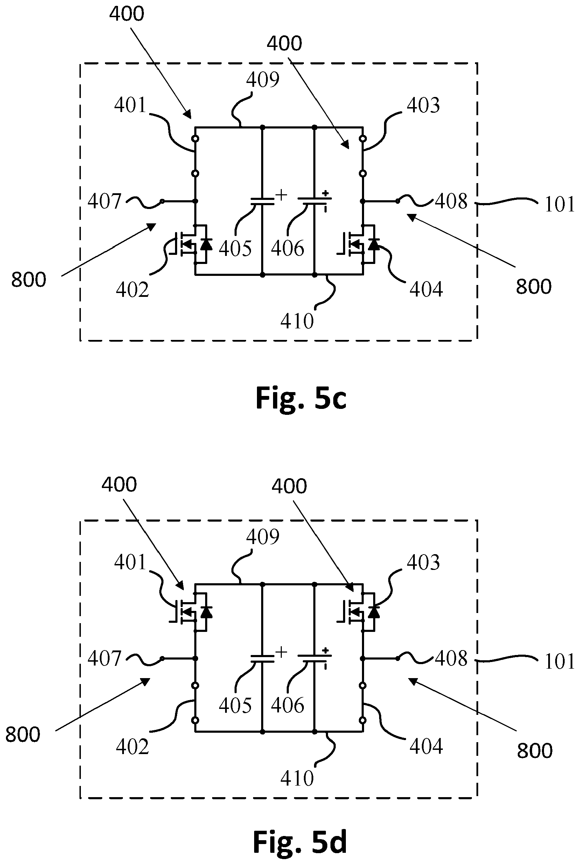

Figs. 5 show the operating states of the H-bridge module. The basic operation of the H-bridge module is achieved through appropriate activation of the switching elements 400 such as active switches 401, 402, 403, 404. The H-bridge module features three different states, which determine how the energy storage element is temporarily connected to those of neighboring modules. Fig. 5a shows the positive output state. This is achieved by turning on the switches 401, 404, while turning off the other switches 402, 403. In this case, the voltage across the terminals 407, 408 will be positive. Alternatively, Fig. 5b shows the negative output state, which is obtained when the switches 401, 404 are turned off, and meanwhile the other switches 402, 403 are turned on. Fig. 5c shows the case with the upper switches 401, 403 on and the lower switches 402, 404 off. In this case, no voltage difference appears across the terminals 407, 408. Fig. 5d shows the case with the upper switches 401, 403 off and the lower switches 402, 404 on. Also, the electrical energy storage element is bypassed in this case. Therefore, the energy storage element in one H-bridge module can either be connected in series with corresponding electrical energy storage elements of adjacent modules or be removed from the circuit. As such, the H-bridge module allows flexible bipolar outputs.

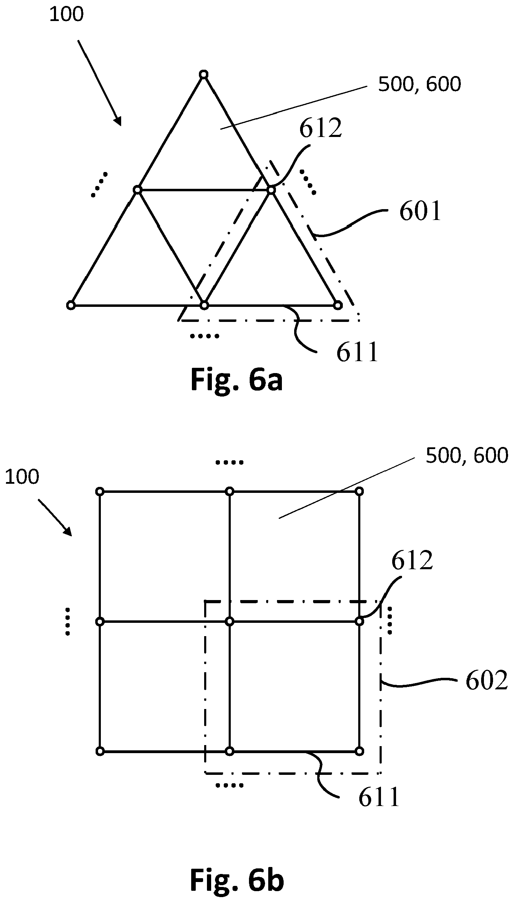

Fig. 6a shows one embodiment of the disclosed multilevel lattice converter 100 based on a plurality of lattice cells 500 such as two-dimensional lattice cells 600 in form of the triangular lattice cell 601 according to aspects of the invention. It comprises a plurality of the triangular lattice cells 601 that are repetitively connected to tile the plane. Each triangular lattice cell comprises at least three interconnected branches 611 and at least three nodes 612. The branches can be cascaded-bridge circuits 111, multi-paralleled circuits 114, or any mix of them.

Fig. 6b shows one embodiment of the disclosed multilevel lattice converter 100 according to aspects of the invention, based on a plurality of lattice cells 500 such as two-dimensional lattice cells 600 in form of the square lattice cell. It comprises a plurality of the square lattice cells 602 that are repetitively connected to tile the plane. Each square lattice cell comprises at least four interconnected branches 611 and at least four nodes 612. The branches can be cascaded-bridge circuits 111, multi-paralleled circuits 114, or any mix of them.

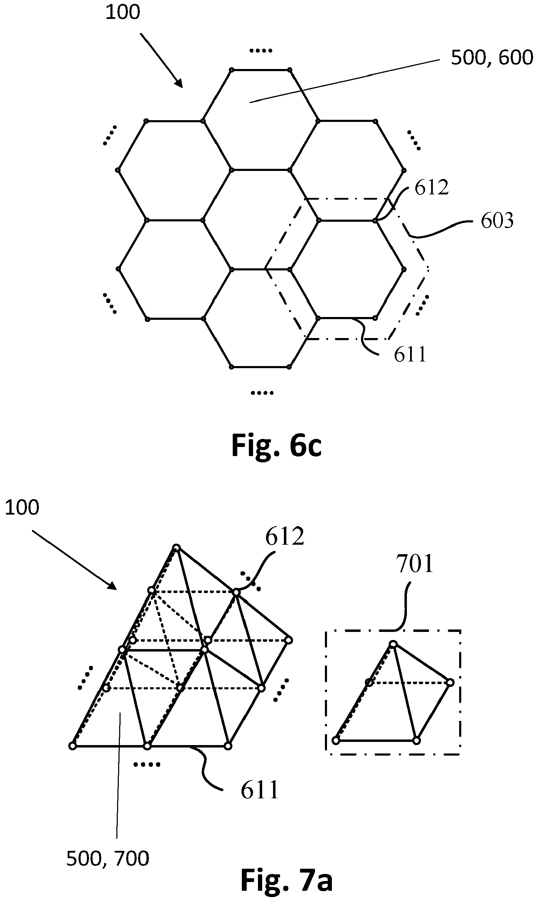

Fig. 6c shows one embodiment of the disclosed multilevel lattice converter 100 according to aspects of the invention. The lattice multilevel converter 100 bases on a plurality of lattice cells 500 such as two-dimensional lattice cells 600 in form of the hexagonal lattice cell according to aspects of the invention. It comprises a plurality of the hexagonal lattice cells 603 that are repetitively connected to tile the plane. Each hexagonal lattice cell comprises at least six interconnected branches 611 and at least six nodes 612. The branches can be cascaded-bridge circuits 111, multi-paralleled circuits 114, or any mix of them.

Fig. 7a shows one embodiment of the disclosed lattice multilevel converter 100 based on a plurality of lattice cells 500 such as three-dimensional lattice cells 700 in form of the pyramid lattice cell according to aspects of the invention. It comprises a plurality of the pyramid lattice cells 701 that are repetitively connected to tile the space. Each pyramid lattice cell comprises at least eight interconnected branches 611 and at least five nodes 612. The branches comprise converter circuits 200 which can be cascaded-bridge circuits 111, multi-paralleled circuits 114, or any mix of them.

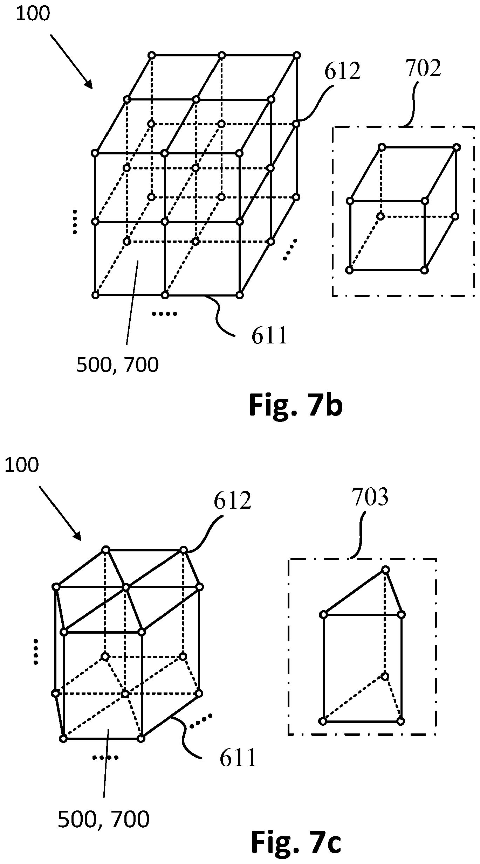

Fig. 7b shows one embodiment of the disclosed lattice converter based on the cubic lattice cell according to aspects of the invention. It comprises a plurality of the cubic lattice cells 702 that are repetitively connected to tile the space. Each cubic lattice cell comprises at least twelve interconnected branches 611 and at least eight nodes 612. The branches can be cascaded-bridge circuits 111, multi-paralleled circuits 114, or any mix of them.

Fig. 7c shows one embodiment of the disclosed lattice converter based on the tri-prism lattice cell according to aspects of the invention. It comprises a plurality of the tri-prism lattice cells 703 that are repetitively connected to tile the space. Each tri-prism lattice cell comprises at least nine interconnected branches 611 and at least six nodes 612. The branches can be cascaded-bridge circuits 111, multi-paralleled circuits 114, or any mix of them.

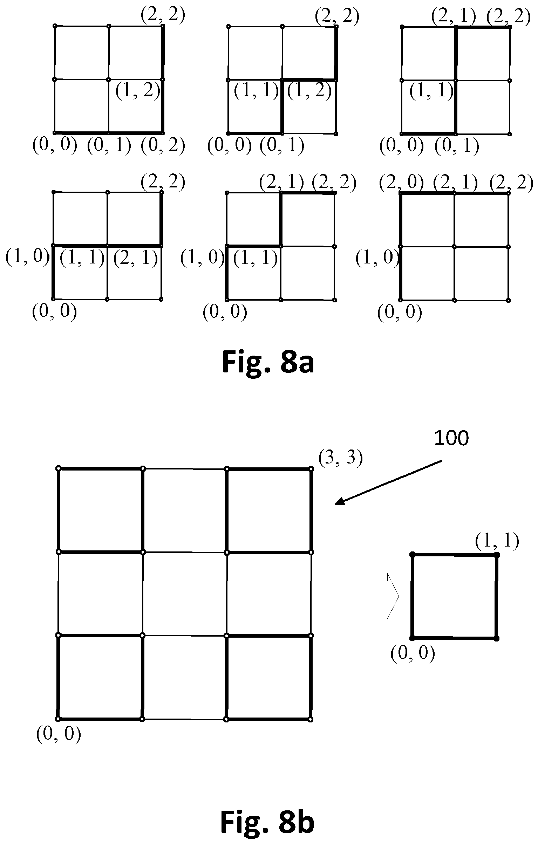

Fig. 8a shows the current routes of one embodiment of the lattice converter based on a 2×2 square lattice according to aspects of the invention. In this case, the output load voltage is chosen to be across the right-top node (2, 2) and the left-bottom node (0, 0). The maximum distance between these two nodes determines the maximum output voltage (2-0) + (2-0) = 4 Vbranch, where Vbranch stands for the maximum branch voltage. To increase the voltage rating, it is necessary to enlarge the grid lattice. There are totally C(4, 2) = 6 different current routes, as shown in Fig. 8a. To increase the current rating, different current routes can be activated during different times. However, this strategy cannot guarantee large currents up to infinite, as the current rating of each branch may be limited.

Fig. 8b shows one embodiment of the lumped nodes for current sharing according to aspects of the invention. In this case, all the branches related to the lumped nodes are shorted, leading to reduced lattice size. However, the current rating of each node is doubled. This node lumping strategy can increase current ratings, theoretically up to infinite, at the expense of grid size.

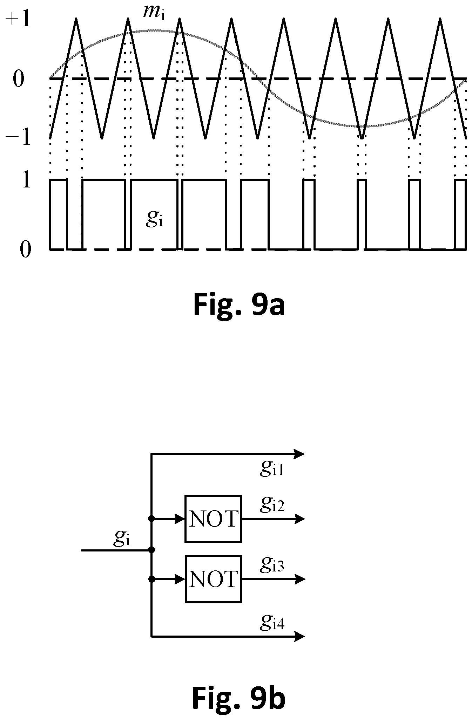

Fig. 9a shows one embodiment of the modulators of the H-bridge module according to aspects of the invention. The modulation wave mi and the carrier wave, which features a symmetrical triangular waveform, are compared, generating a pulse-width-modulated waveform gᵢ.

Fig. 9b shows an example of the gate signals of the H-bridge module according to aspects of the invention. The modulation signal gᵢ produces the gate signals gᵢ₁-₄ through logical operations for driving the corresponding active switches.

Note that so-called dead zones are typically inserted when switching between upper and lower switch pairs in practice.

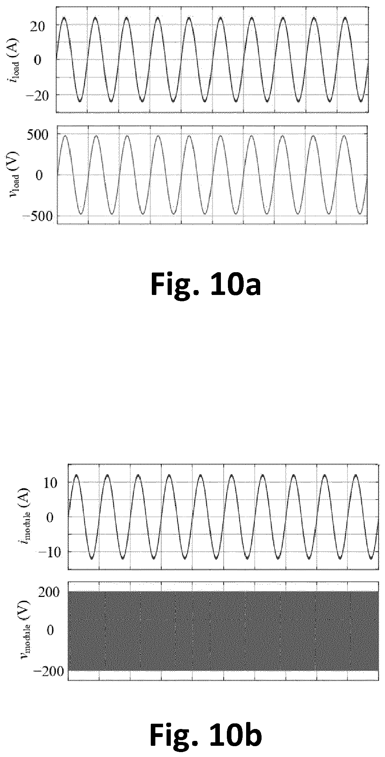

Fig. 10a shows the simulated AC load current and voltage of one embodiment of the disclosed lattice converter as an inverter based on a 2×2 square lattice according to aspects of the invention. In this case, each branch comprises only one H-bridge module. The branches related to the first and the last current routes shown in Fig. 8a are modulated to perform DC-AC power conversion. The DC voltage of each module is 200 V, and the switching frequency is 5 kHz. Obviously, the load currents and voltages are highly sinusoidal.

Fig. 10b shows the simulated module currents and voltages of one embodiment of the disclosed lattice converter as an inverter based on a 2×2 square lattice according to aspects of the invention. As shown, the active modules can share load currents and voltages dependent on modulation and control.

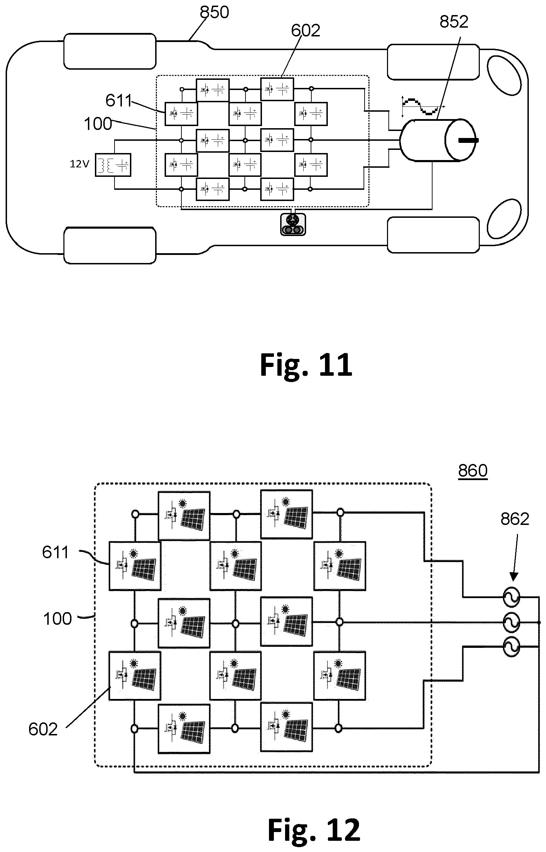

Fig. 11 shows an embodiment of the disclosed inventive lattice multilevel converter 100 applied to electric vehicles 850, where the lattice size is an illustration and can be changed. The lattice multilevel converter 100 comprises four square lattice cells. The branches 611 comprises at least one module 602. In this case, the traction battery module is integrated in lattice multilevel converters 100 to provide multiple functions (i.e., motor drive 852, battery charging, battery management, and auxiliary power supplies), thus addressing the key issues of cost and size reduction as well as reliability and efficiency increase. This approach breaks up the hard-wired battery pack and gets rid of dedicated power converters. The approach segments it into modules with dynamically reconfigurable connectivity, including series, parallel, and bypass connection between modules. Individual energy storage elements of the modules in the branches 611 can be connected or disconnected to the nodes of the modules 602 so that the lattice multilevel converter can be adapted to the current driving situation of the vehicle and to the requirements or needs of the driver. Depending of the switching status of the switching elements of the lattice multilevel converter desired routes through the converter can be activated as for example described in connection with Fig. 8a.

Fig. 12 shows another inventive embodiment of the lattice multilevel converter 100 applied to photovoltaic (PV) generation systems 860, where the lattice size is an illustration and can be changed. As an example, the lattice multilevel converter 100 comprises four square lattice cells. The branches 611 comprises at least one module 602. In this case, we integrate PV modules in lattice converters to provide renewable integration and grid connection 862. Lattice converters 100 allow large currents, high voltages, and modularity using standard half-bridge or H-bridge modules, thereby improving power ratings, power quality, system efficiency, and control flexibility. As compared to conventional multilevel converters, this approach enables multi-port outputs with dynamically reconfigurable connectivity, including series, parallel, and bypass connection between modules. Individual energy storage elements and PV modules in the branches 611 can be connected or disconnected to the nodes of the lattice multilevel converter so that the converter can be adapted to the actual requirements of the energy network, to current weather conditions and/or to the needs of the consumers. Depending of the switching status of the switching elements of the lattice multilevel converter desired routes through the converter can be activated as for example described in connection with Fig. 8a.

To summarize further aspects and preferred embodiments of the invention some examples are given below, which are not restricting the invention and which can be used alone or can be combined in any arbitrary manner.

Electric power converters consist of two-dimensional or three-dimensional lattice circuit cells that are repetitively connected to tile the two-dimensional plane or three-dimensional space are disclosed. Specifically, the lattice multilevel converters based on three two-dimensional lattice cells, including the triangular lattice cell, the square lattice cell, and the hexagonal lattice cell, are disclosed. Moreover, the lattice multilevel converters based on three three-dimensional lattice cells, including the pyramid lattice cell, the cubic lattice cell, and the tri-prism lattice cell, are disclosed. The disclosed lattice cells consist of a plurality of branches, each of which comprises at least one H-bridge and/or half-bridge modules that are connected either in series or in parallel. The disclosed lattice multilevel converters benefit from modularity and scalability. As lattice converters extend themselves into two or three dimensions, they consist of a plurality of modules in series and in parallel, thereby capable of undertaking very high voltages and large currents, theoretically up to infinite. An implementation of the disclosed lattice multilevel converter based on the square lattice cell is provided, which includes twelve H-bridge modules. Simulation results demonstrate that the disclosed lattice converter can operate well as high-power DC-AC converters (or inverters).

A preferred embodiment of the invention comprises at least four two-dimensional lattice cells 601, 602, 603 or three-dimensional lattice cells 701, 702, 703 that are repetitively connected to tile the two-dimensional plane or three-dimensional space, respectively.

The two-dimensional lattice cells 601, 602, 603, wherein the triangular lattice cell 601 comprising at least three branches 611 that are connected via at least three nodes 612; wherein the square lattice cell 602 comprising at least four branches 611 that are connected via at least four nodes 612; wherein the hexagonal lattice cell 603 comprising at least six branches 611 that are connected via at least six nodes 612.

The three-dimensional lattice cells 701, 702, 703, wherein the pyramid lattice cell 701 comprising at least eight branches 611 that are connected via at least five nodes 612; wherein the cubic lattice cell 702 comprising at least twelve branches 611 that are connected via at least eight nodes 612; wherein the tri-prism lattice cell 703 comprising at least nine branches 611 that are connected via at least six nodes 612.

In one embodiment, each branch 611 comprises at least one cascaded converter circuits 111 that each comprises at least one converter modules 101 that are connected in series and at least two terminals 112, 113 that are tied to at least two nodes 612.

In another embodiment, each branch 611 comprises at least one multi-paralleled converter circuits 114 that each comprises at least one converter modules 101 that are connected in parallel and at least two terminals 115, 116 that are tied to at least two nodes 612.

In an alternative embodiment, branches 611 comprise at least one cascaded converter circuits 111 and at least one paralleled converter circuits 114.

Some or all of the switching elements 401, 402, 403, 404, 411, 412, 421, 422, 431, 432 can be semiconductor switches. These semiconductor switches can, for instance, be diodes or transistors, such as insulated gate bipolar transistors (IGBT) or field effect transistors (FET).

In another embodiment, the at least two module energy storage elements of the symmetrical half-bridge module comprise at least a first energy storage element 433, 435 and a second energy storage element 434, 436, wherein the voltage rating of the first energy storage element is less than three quarters of the voltage rating of the second energy storage element.

The modules of a preferred embodiment comprise H-bridges that each comprises at least four switching elements 401, 402, 403, 404, at least one energy storage elements 405, 406, and at least two module terminals 407, 408, wherein at least two of the switching elements 401, 402 are connected in series to form at least one first half-bridge and at least a second two of the switching elements 403, 404 are connected in series to form at least one second half-bridge, wherein the electrical connection point of the switches in at least one first half-bridge is electrically connected to at least one first module terminal 407, and the electrical connection point of the switches in at least one second half-bridge is electrically connected to at least one second module terminal 408, wherein at least one first half-bridge, at least one second half-bridge, and at least one energy storage elements 405, 406 are connected electrically in parallel forming at least one positive rail 409 and at least one negative rail 410, and wherein at least four switching elements 401, 402, 403, 404 can be switched so as to electrically connect each of at least two module terminals 407, 408 individually and temporarily to at least one positive rail 409 or to at least one negative rail 410.

Modules can further comprise positive, negative, or symmetric half-bridges that each comprises at least two switching elements 411, 412, at least one energy storage elements 413, 414, and at least two module terminals 415, 416, wherein at least two of the switching elements 411, 412 are connected in series to form at least one first half-bridge, wherein the electrical connection point of the switches in at least one first half-bridge is electrically connected to at least one first module terminal 415, and at least one negative rail is electrically connected to at least one second module terminal 416, wherein at least one first half-bridge and at least one energy storage elements 413, 414 are connected electrically in parallel forming at least one positive rail 417 and at least one negative rail 416, and wherein at least two switching elements 411, 412 can be switched so as to electrically connect at least one module terminals 415 temporarily to at least one positive rail 417 or to at least one negative rail 416.

The inventive lattice multilevel converters as disclosed particularly in Figs. 6a, 6b, 6c, 7a, 7b, and 7c, comprise two-dimensional or three-dimensional lattice circuit cells that are repetitively connected to tile the two-dimensional plane or three-dimensional space. The disclosed lattice multilevel converters consist of a plurality of branches and modules that can be programmed to be connected in series and/or in parallel, thereby capable of undertaking very high voltages and large currents, theoretically up to infinite. The disclosed lattice multilevel converters benefit from modularity and scalability. This invention particularly discloses the lattice multilevel converter based on the square cell (see Fig. 6b) and validates its benefits.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such software may also be distributed in other forms, such as via the Internet or other wired or wireless telecommunication systems. A method according to the present invention may particularly be carried out to control the operation of a software defined radio.

The elements of the disclosed devices, circuitry and system may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

### Referenced Non-Patent Literature

A. Nabae, I. Takahashi, and H. Akagi (1981). A new neutral-point-clamped PWM inverter, IEEE Transactions on Industrial Application, 17(5):518-523
T. A. Meynard and H. Foch (1992). Multi-level conversion: high voltage choppers and voltage-source inverters, IEEE Power Electronics Specialist Conference, 397-403
R. Marquardt and A. Lesnicar (2003). A new modular voltage source inverter topology, IEEE European Conference on Power Electronics and Applications, 1-10
K. K. Gupta, A. Ranjan, P. Bhatnagar, L. K. Sahu, and S. Jain, "Multilevel inverter topologies with reduced device count: a review," in IEEE Transactions on Power Electronics, vol. 31, no. 1, pp. 135-151, Jan. 2016, doi: 10.1109/TPEL.2015.2405012
S. Yang, J. Fang, Y. Tang, H. Qiu, C. Dong, and P. Wang, "Modular multilevel converter synthetic inertia-based frequency support for medium-voltage microgrids," in IEEE Transactions on Industrial Electronics, vol. 66, no. 11, pp. 8992-9002, Nov. 2019, doi: 10.1109/TIE.2018.2890491
M. Glinka and R. Marquardt, "A new AC/AC multilevel converter family," in IEEE Transactions on Industrial Electronics, vol. 52, no. 3, pp. 662-669, Jun. 2005, doi: 10.1109/TIE.2005.843973
M. A. Perez, S. Bernet, J. Rodriguez, S. Koura, and R. Lizana, "Circuit topologies, modeling, control schemes, and applications of modular multilevel converters," in IEEE Transactions on Power Electronics, vol. 30, no. 1, pp. 4-17, Jan. 2015, doi: 10.1109/TPEL.2014.2310127
J. Fang, Z. Li, and S. Goetz, "Multilevel Converters with Symmetrical Half-Bridge Submodules and Sensorless Voltage Balance," IEEE Transactions on Power Electronics, doi: 10.1109/TPEL.2020.3000469
R. Lizana F., S. Rivera, Z. Li, J. Luo, A. V. Peterchev, and S. M. Goetz, "Modular Multilevel Series/Parallel Converter With Switched-Inductor Energy Transfer Between Modules," in IEEE Transactions on Power Electronics, vol. 34, no. 5, pp. 4844-4852, May 2019, doi: 10.1109/TPEL.2018.2859902
Y. Deng and R. G. Harley, "Space-Vector Versus Nearest-Level Pulse Width Modulation for Multilevel Converters," in IEEE Transactions on Power Electronics, vol. 30, no. 6, pp. 2962-2974, June 2015, doi: 10.1109/TPEL.2014.2331687
E. Specht, C. Aschauer, C. Korte and S. Goetz, "Direct Torque Control with Variable Level Discretization for Automotive Drives," PCIM Europe 2017; International Exhibition and Conference for Power Electronics, Intelligent Motion, Renewable Energy and Energy Management, Nuremberg, Germany, 2017, pp. 1-8., ISBN: 978-3-8007-4424-4
C. Wang, F. R. Lizana, Z. Li, A. V. Peterchev, and S. M. Goetz, "Submodule short-circuit fault diagnosis based on wavelet transform and support vector machines for modular multilevel converter with series and parallel connectivity," IECON 2017 - 43rd Annual Conference of the IEEE Industrial Electronics Society, Beijing, 2017, pp. 3239-3244, doi: 10.1109/IECON.2017.8216547
C. Wang, A. V. Peterchev, and S. M. Goetz, "Online Switch Open-Circuit Fault Diagnosis Using Reconfigurable Scheduler for Modular Multilevel Converter with Parallel Connectivity," 2019 21st European Conference on Power Electronics and Applications (EPE '19 ECCE Europe), Genova, Italy, 2019, pp. P.1-P.10, doi: 10.23919/EPE.2019.8915402
S. M. Goetz, A. V. Peterchev, and T. Weyh, "Modular Multilevel Converter With Series and Parallel Module Connectivity: Topology and Control," in IEEE Transactions on Power Electronics, vol. 30, no. 1, pp. 203-215, Jan. 2015, doi: 10.1109/TPEL.2014.2310225
S. M. Goetz, Z. Li, X. Liang, C. Zhang, S. M. Lukic, and A. V. Peterchev, "Control of Modular Multilevel Converter With Parallel Connectivity-Application to Battery Systems," in IEEE Transactions on Power Electronics, vol. 32, no. 11, pp. 8381-8392, Nov. 2017, doi: 10.1109/TPEL.2016.2645884
Z. Li, R. Lizana F., Z. Yu, S. Sha, A.V. Peterchev, and S.M. Goetz, "A Modular Multilevel Series/Parallel Converter for a Wide Frequency Range Operation," in IEEE Transactions on Power Electronics, vol. 34, no. 10, pp. 9854-9865, Oct. 2019, doi: 10.1109/TPEL.2019. 2891052
M. C. Chandorkar, D. M. Divan, and R. Adapa, "Control of parallel connected inverters in standalone ac supply systems," in IEEE Transactions on Industrial Application, vol. 29, no. 1, pp. 136-143, Jan./Feb. 1993, doi: 10.1109/28.195899

## Claims

1. Lattice multilevel converter comprising at least two lattice cells (500), the lattice cell (500) comprises at least 3 nodes (612) and at least 3 branches (611), each branch (611) interconnecting two of the nodes (612);
wherein
at least one branch (611) comprises a converter circuit (200) having at least one module (101);
the module (101) having an energy storage element (300), a switching element (400) and two module terminals (800); wherein the switching element (400) is able to connect the energy storage element (300) in such a manner that the module (101) acts like a H-bridge circuit and/or a half-bridge circuit between the two module terminals (800);
one of the nodes (612) is a converter terminal; and wherein the lattice multilevel converter (100) comprises at least two converter terminals; and
the two lattice cells (500) being adjacent to one another in such a manner that the two lattice cells (500) share at least one branch (611) and at least two nodes (612).

2. Lattice multilevel converter, according to any one of the preceding claims, wherein the lattice cell (500) is a two-dimensional lattice cell (600);
and wherein the lattice multilevel converter (100) preferable comprises at least four two-dimensional lattice cells (600) that are repetitively connected to generate a two-dimensional plane.

3. Lattice multilevel converter, according to claim 2, wherein the two-dimensional lattice cell (600) is a triangular lattice cell, a square lattice cell or a hexagonal lattice cell.

4. Lattice multilevel converter, according to any one of the preceding claims, wherein the lattice cell (500) is a three-dimensional lattice cell (700);
and wherein the lattice multilevel converter (100) preferable comprises at least four three-dimensional lattice cells (700) that are repetitively connected to generate a three-dimensional space.

5. Lattice multilevel converter, according to claim 4, wherein the three-dimensional lattice cell (700) is a pyramid lattice cell, preferably with a square base, a cubic lattice cell, or a prism lattice cell, preferably a tri-prism lattice cell.

6. Lattice multilevel converter, according to any one of the preceding claims, wherein at least one of the branches (611) comprises at least one converter circuit (200) that is a cascaded converter circuit (111), the cascaded converter circuit (111) comprises at least two converter modules (101), that are connected in series, and at least two terminals (800), that are connected to at least two nodes (612).

7. Lattice multilevel converter, according to any one of the preceding claims, wherein at least one of the branches (611) comprises at least one converter circuit (200) that is a multi-paralleled converter circuits (114), the multi-paralleled converter circuit (114) comprises at least two converter modules (101), that are connected in parallel, and at least two terminals (800), that are connected to at least two nodes (612).

8. Lattice multilevel converter, according to any one of the preceding claims, wherein at least one of the switching elements (400) is a semiconductor switch, wherein the semiconductor switch can be a diode or a transistor, preferably an insulated gate bipolar transistor (IGBT) or a field effect transistor (FET).

9. Lattice multilevel converter, according to any one of the preceding claims, wherein the energy storage element (300) of the module (101) is a capacitor or a battery or a combination of capacitor and battery.

10. Lattice multilevel converter, according to any one of the preceding claims, wherein the lattice multilevel converter has a single-phase topology or a multi-phase topology, preferably a three-phase topology, and/or is a single-port embodiment, a multi-port embodiment, preferably a two-port embodiment.

11. Lattice multilevel converter, according to any one of the preceding claims, wherein at least one of the modules is a half-bridge module, preferably a symmetrical half-bridge module, having at least a first energy storage element (433, 435) and a second energy storage element (434, 436), wherein the voltage rating of the first energy storage element is less than three quarters of the voltage rating of the second energy storage element.

12. Lattice multilevel converter, according to any one of the preceding claims, wherein the module comprises at least two switching elements (400), at least one energy storage element (300), and two module terminals (800), wherein two of the switching elements (400) are connected in series to form a half-bridge, preferably a positive half-bridge, a negative half-bridge or a symmetrical half-bridge,
wherein the electrical connection point of the switching elements (400) in the half-bridge is electrically connected to the first module terminal (800), and a negative rail of the module is electrically connected to the second module terminal (800),
wherein the half-bridge and one of the energy storage elements (400) are connected electrically in parallel forming a positive rail (417) and a negative rail (416), and
wherein the two switching elements (400) can be switched so as to electrically connect at least one module terminal (800) temporarily to the positive rail (417) or to the negative rail (416).

13. Lattice multilevel converter, according claim 12, wherein the module comprises four switching elements (400) forming a H-bridge that comprises two half-bridges;
wherein two of the switching elements (400) are connected in series to form the first half-bridge and the second two of the switching elements (400) are connected in series to form the second half-bridge,
wherein the electrical connection point of the switching elements (400) in the first half-bridge is electrically connected to the first module terminal (800), and the electrical connection point of the switches in the second half-bridge is electrically connected to the second module terminal (408), wherein the half-bridges and at least one energy storage element (300) are connected electrically in parallel forming the positive rail (409) and the negative rail (410), and wherein at least four switching elements (401, 402, 403, 404) can be switched so as to electrically connect each of the module terminals (407, 408) individually and temporarily to the positive rail (409) or to the negative rail (410).

14. Lattice multilevel converter, according to any one of the preceding claims, wherein the switching elements (400) and the energy storage elements (300) are electronical components, preferably all switching elements (400) are semiconductor switches and all energy storage elements (300) are capacitors, so that the lattice multilevel converter can be integrated in an electronic chip.

15. Electronic chip comprising a lattice multilevel converter according to one of the preceding claims, wherein the switching elements (400) and the energy storage elements (300) are electronic components, preferably all switching elements (400) are semiconductor switches and all energy storage elements (300) are capacitors.

16. Method to control a lattice multilevel converter, preferably a lattice multilevel converter according to any one of the preceding claims, the lattice multilevel converter comprises at least two lattice cells (500), each comprising at least 3 nodes (612) and at least 3 branches (611), each branch (611) interconnecting two of the nodes (612) and one of the nodes is a converter terminal, wherein the at least one branch (611) comprises a converter circuit (200) having a module (101) that has an energy storage element (300), a switching element (400) and two module terminals (800), wherein the lattice multilevel converter (100) has two converter terminals and wherein two lattice cells (500) share at least one branch (611) and two nodes (612), comprising the following step:
switching the switching element (400) of the module in such a manner that the energy storage element (300) is connected in a predetermined way in the lattice cell (500) so that a predetermined electrical conversion takes place between the two converter terminals of the lattice multilevel converter (100).
